# EUROPÄISCHE PATENTSCHRIFT

(11) **EP 4 515 061 B1**
(45) Veröffentlichungstag und Bekanntmachung des Hinweises auf die Patenterteilung: **24.12.2025**
(21) Anmeldenummer: 23717012.1
(22) Anmeldetag: 05.04.2023
(51) Int. Cl.: E05D 5/02

(54) **BESCHLAG ZUR BEWEGBAREN LAGERUNG EINES MÖBELTEILS**
FITTING FOR MOVABLY MOUNTING A FURNITURE PART
FERRURE POUR MONTAGE MOBILE D'UNE PARTIE DE MEUBLE

(30) Priorität: 29.04.2022 AT 502942022
(43) Veröffentlichungstag der Anmeldung: 05.03.2025
(73) Patentinhaber: JULIUS BLUM GMBH, 6973 Höchst (AT)
(72) Erfinder: GÖTZ, Christof, 6890 Lustenau (AT); DÜR, Stefan, 6858 Schwarzach (AT)
(74) Vertreter: Torggler & Hofmann Patentanwälte - Innsbruck
(86) Internationale Anmeldenummer: PCT/AT2023/060116
(87) Internationale Veröffentlichungsnummer: WO 2023/205829

(56) Entgegenhaltungen:
- EP-A1- 1 306 504
- EP-A2- 1 191 175
- DE-A1- 10 110 921

## Beschreibung

Die Erfindung betrifft einen Beschlag zur bewegbaren Lagerung eines Möbelteils, einer Tür oder eines Fensters an einer Trägerstruktur gemäß dem Oberbegriff des Anspruchs 1. Die Erfindung betrifft weiterhin ein Möbel mit wenigstens einer Trägerstruktur, welche vorzugsweise einen schachtförmigen Hohlraum aufweist, wenigstens einem solchen Beschlag, und wenigstens einem an der Trägerstruktur mittels des Beschlags bewegbar gelagerten Möbelteil, welches vorzugsweise als Falt- oder Falt-Schiebe-Tür ausgebildet ist. Und schließlich betrifft die Erfindung ein Verfahren zur bewegbaren Lagerung eines Möbelteils, einer Tür oder eines Fensters an einer Trägerstruktur mittels wenigstens eines solchen Beschlags.

Ein Beschlag zur bewegbaren Lagerung eines Möbelteils an einer Trägerstruktur ist aus der AT 521365 bekannt. Ein Nachteil dieses Beschlags besteht allerdings darin, dass er technisch aufwendig ausgebildet ist, wodurch die Befestigung der beiden Beschlagteile erschwert wird. Je komplexer sich die Befestigung gestaltet, desto höher ist auch das Risiko einer Fehlbedienung. DE10110921A1 offenbart ebenso ein Beispiel eines Beschlags.

Die Aufgabe der Erfindung besteht darin, die aus dem Stand der Technik bekannten Nachteile zumindest teilweise zu beheben und insbesondere einen Beschlag anzugeben, der sich durch einen erhöhte Bedienerfreundlichkeit, vor allem bei der Montage, auszeichnet. Weiterhin sollen ein Möbel mit wenigstens einem solchermaßen verbesserten Beschlag sowie ein Verfahren zur bewegbaren Lagerung eines Möbelteils, einer Tür oder eines Fensters an einer Trägerstruktur mittels wenigstens eines solchermaßen verbesserten Beschlags angegeben werden.

Diese Aufgabe wird durch die Merkmale der Ansprüche 1, 14 und 15 gelöst.

Beim Beschlag zur bewegbaren Lagerung eines Möbelteils, einer Tür oder eines Fensters an einer Trägerstruktur ist es demnach vorgesehen, dass die Befestigungsvorrichtung wenigstens ein erstes Bauteil mit wenigstens einem gewindelosen Abschnitt und wenigstens einem Gewindeabschnitt und wenigstens ein zweites Bauteil mit wenigstens einem Gegengewinde umfasst, wobei der gewindelose Abschnitt, der Gewindeabschnitt und das Gegengewinde derart an den beiden Bauteilen der Befestigungsvorrichtung angeordnet sind, dass das Gegengewinde in einer Verschiebestellung mit dem gewindelosen Abschnitt in Kontakt steht und in einer Eingriffsstellung mit dem Gewindeabschnitt in Eingriff steht.

Auf diese Weise können die beiden Bauteile der Befestigungsvorrichtung in der Verschiebestellung schnell und einfach zusammengefügt und anschließend in der Eingriffsstellung miteinander verbunden werden. Insbesondere dann, wenn mehr als eine Befestigungsvorrichtung vorgesehen ist und/oder das am ersten Beschlagteil gelagerte Möbelteil, Fenster oder die Tür ein hohes Gewicht aufweist, wird der Montagevorgang dadurch erleichtert. Auch eine werkzeuglose Befestigung der beiden Beschlagteile ist auf diese Weise möglich.

Gemäß vorteilhaften Ausführungsformen ist es vorgesehen, dass das erste Bauteil der Befestigungsvorrichtung als Mutter, vorzugsweise als Einpressmutter, ausgebildet ist, und/oder im oder am zweiten Beschlagteil angeordnet ist.

Alternativ oder ergänzend kann es vorgesehen sein, dass das erste Bauteil eine im Wesentlichen zylinderförmige Innenwandung aufweist und der gewindelose Abschnitt und der Gewindeabschnitt an der Innenwandung angeordnet sind.

Erfindungsgemäß weist das erste Bauteil einen gegenüber einer Längsachse des ersten Bauteils schräg verlaufenden Kanal auf, an welchem der gewindelose Abschnitt angeordnet ist.

In Bezug auf das zweite Bauteil der Befestigungsvorrichtung hat es sich als günstig erwiesen, dass das zweite Bauteil als Schraube, vorzugsweise als Rändelschraube, ausgebildet ist, und/oder in Kontakt mit dem ersten Beschlagteil bringbar ist.

Erfindungsgemäß ist das Gegengewinde durch eine Schwenkbewegung aus der Verschiebestellung in die Eingriffsstellung überführbar, vorzugsweise wobei die Schwenkbewegung manuell und/oder durch einen Anschlag eines der beiden Bauteile an einen Gegenanschlag durchführbar ist.

Es kann vorgesehen sein, dass der Gewindeabschnitt eine erste Längsachse aufweist und das Gegengewinde eine zweite Längsachse aufweist, und wobei die beiden Längsachsen in der Verschiebestellung einen spitzen Winkel, vorzugsweise zwischen 5° und 15°, einschließen und in der Eingriffsstellung im Wesentlichen parallel zueinander angeordnet sind.

Weitere vorteilhafte Ausführungsformen sind in den Ansprüchen 8 bis 11 definiert.

Zur Erhöhung der Befestigungssicherheit kann es vorgesehen sein, dass der Gewindeabschnitt und/oder das Gegengewinde wenigstens einen Klebepunkt aufweisen, mit welchem die beiden Bauteilen der Befestigungsvorrichtung in der Eingriffsstellung verklebbar sind, vorzugsweise wobei der Klebepunkt aus einem Kleber besteht, welcher durch eine mechanische Beanspruchung aktivierbar ist.

Alternativ oder ergänzend bietet es sich an, dass die beiden Beschlagteile in einem befestigten Zustand zu einem überwiegenden Teil flächig aneinander anliegen, und/oder wobei wenigstens ein zusätzliches von der Befestigungsvorrichtung gesondertes Fixiermittel vorgesehen ist, mit welchem die beiden Beschlagteile fixierbar sind.

Wie eingangs ausgeführt, wird Schutz auch begehrt für ein Möbel mit wenigstens einer Trägerstruktur, welche vorzugsweise einen schachtförmigen Hohlraum aufweist, wenigstens einem erfindungsgemäßen Beschlag und wenigstens einem an der Trägerstruktur mittels des Beschlags bewegbar gelagerten Möbelteil, welches vorzugsweise als Falt- oder Falt-Schiebe-Tür ausgebildet ist.

Das Verfahren zur bewegbaren Lagerung eines Möbelteils, einer Tür oder eines Fensters an einer Trägerstruktur mittels wenigstens eines erfindungsgemäßen Beschlags umfasst die folgenden, vorzugsweise in der angegebenen Reihenfolge chronologischen, Verfahrensschritte: das zweite Beschlagteil wird mit der Trägerstruktur verbunden, das Möbelteil, die Tür oder das Fenster wird mit dem ersten Beschlagteil verbunden, das erste Beschlagteil wird mittels der wenigstens einen Befestigungsvorrichtung am zweiten Beschlagteil befestigt, wobei das Gegengewinde in der Verschiebestellung relativ zum gewindelosen Abschnitt verschoben, anschließend, vorzugsweise durch eine Schwenkbewegung, in die Eingriffsstellung überführt und schließlich in der Eingriffsstellung durch eine Rotationsbewegung so lange relativ zum Gewindeabschnitt bewegt wird, bis die beiden Beschlagteile zueinander fixiert sind.

Weitere Einzelheiten und Vorteile der Erfindung werden anhand der Figurenbeschreibung unter Bezugnahme auf die Zeichnungen im Folgenden näher erläutert. Darin zeigen:
- Fig. 1, 2: ein Möbel mit einem bewegbaren Möbelteil in Form einer Tür, die in zwei Schwenkstellungen dargestellt ist,
- Fig. 3, 4: das Möbel gemäß Fig. 2 aus einer anderen Blickrichtung, wobei in Fig. 4 ein vergrößerter Ausschnitt dargestellt ist,
- Fig. 5: ein erstes Ausführungsbeispiel des Beschlags,
- Fig. 6, 7: ein zweites Ausführungsbeispiel des Beschlags, wobei in Fig. 7 ein vergrößerter Ausschnitt dargestellt ist,
- Fig. 8, 9, 10: das zweites Ausführungsbeispiel des Beschlags in unterschiedlichen Querschnittsdarstellungen, wobei die Fig. 9 einen vergrößerten Ausschnitt aus der Fig. 8 zeigt, und
- Fig. 11 - 14: eine Befestigungsvorrichtung in unterschiedlichen Relativstellungen der beiden Bauteile.

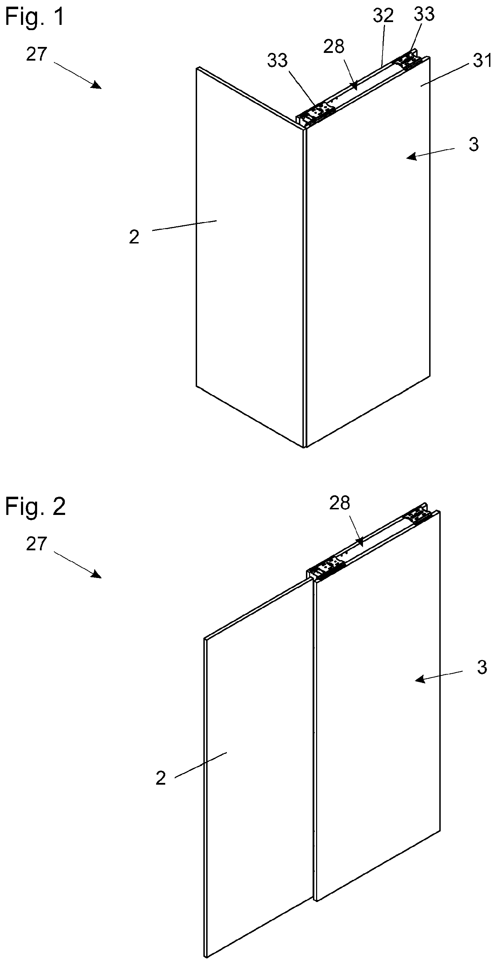

In den Figuren 1 bis 4 ist ein Möbel 27 mit einem bewegbaren Möbelteil 2 in Form einer Falt-Tür dargestellt. Das Möbelteil 2 kann z.B. auch als Falt-Schiebe-Tür ausgebildet sein.

Das Möbel 27 umfasst eine Trägerstruktur 3, welche wie im dargestellten Fall als schachtförmiger Hohlraum 28 ausgebildet sein kann. Dieser Hohlraum 28 kann z.B. aus einer ersten Möbelwand 31 und einer zweiten Möbelwand 32, welche im Wesentlichen parallel zueinander angeordnet sind, gebildet sein. Die beiden Möbelwände 31, 32 können durch eine oder mehrere Verbindungsvorrichtungen 33 miteinander verbunden sein.

Das Möbelteil 2 kann in einer Stellung im Wesentlichen quer zur Trägerstruktur 3 (vgl. Fig. 1), in einer Stellung im Wesentlichen parallel zur Trägerstruktur 3 (vgl. Fig. 2) und in allen Zwischenstellungen angeordnet werden. Weiterhin kann das Möbelteil 2 auch zumindest bereichsweise im Hohlraum 28 angeordnet werden. In der Stellung im Wesentlichen quer zur Trägerstruktur 3 kann das Möbelteil 2 zumindest bereichsweise ein anderes Möbelteil abdecken, z.B. ein Küchenmöbel und/oder - gerät.

Das Möbelteil 2 ist über wenigstens einen Beschlag 1 (vgl. die nachfolgenden Figuren) an der Trägerstruktur 3 bewegbar gelagert. Hierzu können Scharnier 19 vorgesehen sein, welche einerseits mit dem Möbelteil 2 und andererseits mit einem zweiten Beschlagteil 5 des Beschlags 1 verbunden sind. Über die Scharniere 19 kann das Möbelteil 2 relativ zur Trägerstruktur 3 verschwenkt werden.

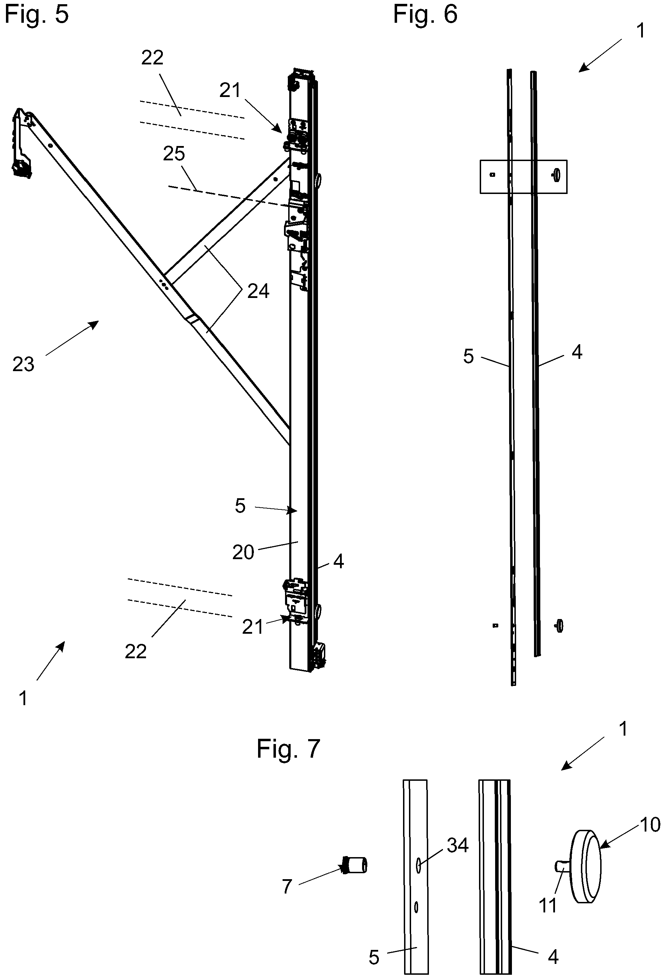

Die Figuren 5 ff. zeigen Details des Beschlags 1 und der Befestigungsvorrichtung 6.

Der Beschlag 1 zur bewegbaren Lagerung eines Möbelteils 2, einer Tür oder eines Fensters an einer Trägerstruktur 3, umfasst ein erstes Beschlagteil 4, welches mit dem Möbelteil 2, der Tür oder dem Fenster verbindbar oder verbunden ist, und wenigstens ein zweites Beschlagteil 5, welches mit der Trägerstruktur 3 verbindbar oder verbunden ist, wobei wenigstens eine Befestigungsvorrichtung 6 vorgesehen ist, mit welcher das erste Beschlagteil 4 am zweiten Beschlagteil 5 befestigbar ist.

Die Befestigungsvorrichtung 6 umfasst wenigstens ein erstes Bauteil 7 mit wenigstens einem gewindelosen Abschnitt 8 und wenigstens einem Gewindeabschnitt 9 und wenigstens ein zweites Bauteil 10 mit wenigstens einem Gegengewinde 11, wobei der gewindelose Abschnitt 8, der Gewindeabschnitt 9 und das Gegengewinde 11 derart an den beiden Bauteilen 7, 10 der Befestigungsvorrichtung 6 angeordnet sind, dass das Gegengewinde 11 in einer Verschiebestellung mit dem gewindelosen Abschnitt 8 in Kontakt steht und in einer Eingriffsstellung mit dem Gewindeabschnitt 9 in Eingriff steht.

Es können mehr als eine, vorzugsweise zwei (wie in den dargestellten Fällen) oder drei, Befestigungsvorrichtung 6 vorgesehen sein, mit welcher das erste Beschlagteil 4 am zweiten Beschlagteil 5 befestigbar ist.

Das zweite Beschlagteil 5 kann einen längserstreckten Träger 20 umfassen (vgl. Fig. 5).

Es kann wenigstens eine mit dem zweiten Beschlagteil 5 verbindbare oder verbundene Führungsvorrichtung 21 und wenigstens eine Führungsschiene 22 vorgesehen sein, an welcher die Führungsvorrichtung 21 verschiebbar lagerbar oder gelagert ist. Die Führungsschienen 22, welche in der Fig. 5 schematisch angedeutet sind, können z.B. an der Möbelwand 32 angeordnet sein.

Beim in der Fig. 5 dargestellten Ausführungsbeispiel umfasst der Beschlag 1 wenigstens eine Kompensationsvorrichtung 23 zur Kompensation eines Kippmoments, wobei die Kompensationsvorrichtung 23 mit dem zweiten Beschlagteil 5 verbindbar ist, vorzugsweise wobei die Kompensationsvorrichtung 23 wenigstens eine, vorzugsweise Y-förmige, Schere 24 und/oder wenigstens einen Seilzug 25 umfasst.

Das erste Bauteil 7 der Befestigungsvorrichtung 6 kann als Mutter, vorzugsweise als Einpressmutter, ausgebildet und/oder im oder am zweiten Beschlagteil 5 angeordnet sein. Zur Lagerung der Mutter kann im oder am zweiten Beschlagteil 5 eine Öffnung 34 vorgesehen sein.

Das zweite Bauteil 10 der Befestigungsvorrichtung 6 kann als Schraube, vorzugsweise als Rändelschraube, ausgebildet und/oder in Kontakt mit dem ersten Beschlagteil 4 bringbar sein.

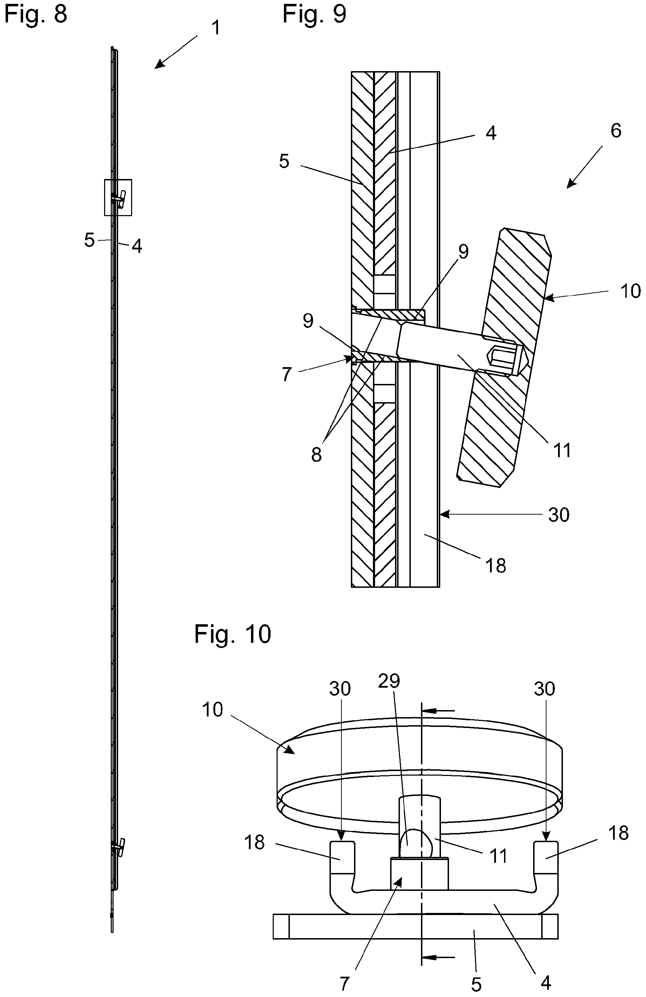

Wie z.B. in den Figuren 9 und 10 dargestellt ist, kann das erste Beschlagteil 4 wenigstens eine, vorzugsweise mehrere, Schnittstelle 18 zur, vorzugsweise lösbaren, Befestigung eines Scharniers 19 aufweisen, und/oder als Stahlprofil ausgebildet sein, und/oder in einem Querschnitt im Wesentlichen C-förmig ausgebildet sein.

Als Schnittstelle 18 kann ein oder können mehrere Stege des ersten Beschlagteils 4 fungieren, an denen ein oder mehrere Scharniere 19 befestigbar sind.

Die beiden Beschlagteile 4, 5 können in einem befestigten Zustand zu einem überwiegenden Teil flächig aneinander anliegen.

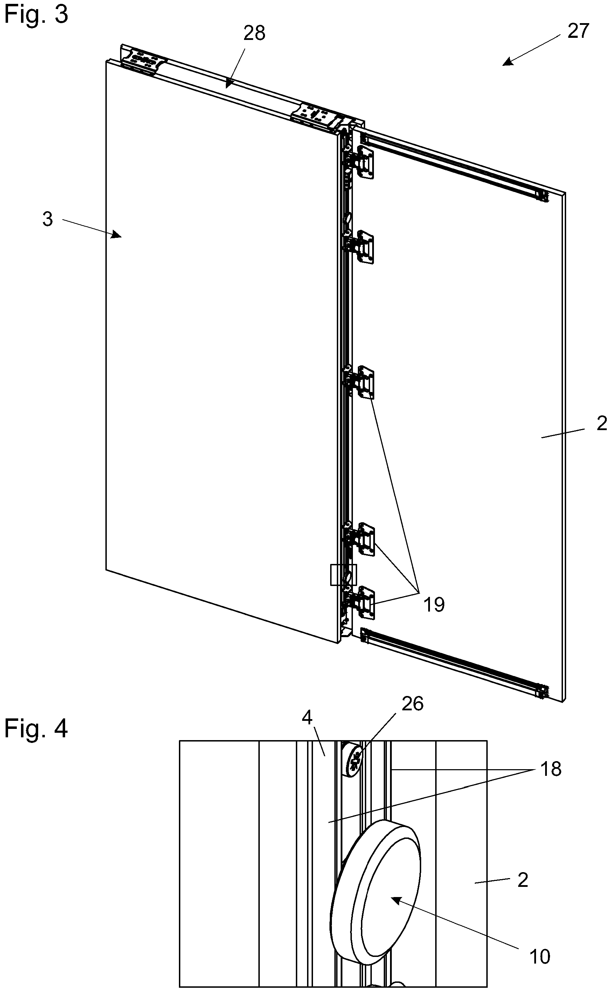

Wie aus der Fig. 4 hervorgeht, kann optional wenigstens ein zusätzliches von der Befestigungsvorrichtung 6 gesondertes Fixiermittel 26 vorgesehen sein, mit welchem die beiden Beschlagteile 4, 5 fixierbar sind.

Alternativ oder ergänzend kann es optional vorgesehen sein, dass der Gewindeabschnitt 9 und/oder das Gegengewinde 11 wenigstens einen Klebepunkt 29 aufweisen, mit welchem die beiden Bauteilen 7, 10 der Befestigungsvorrichtung 6 in der Eingriffsstellung verklebbar sind, vorzugsweise wobei der Klebepunkt 29 aus einem Kleber besteht, welcher durch eine mechanische Beanspruchung aktivierbar ist. Ein solcher Klebepunkt ist exemplarisch in der Fig. 10 angedeutet und dient der Sicherung des Bauteils 10.

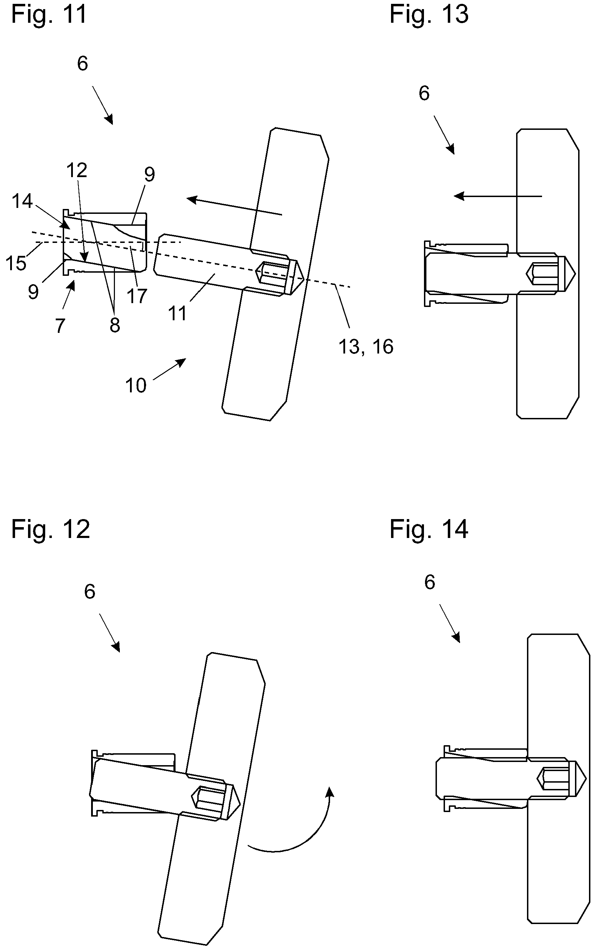

Die Fig. 11 bis 14 zeigen eine Befestigungsvorrichtung in unterschiedlichen Relativstellungen der beiden Bauteile 7, 10.

Das erste Bauteil 7 weist eine im Wesentlichen zylinderförmige Innenwandung 12 auf und der gewindelose Abschnitt 8 und der Gewindeabschnitt 9 sind an der Innenwandung 12 angeordnet.

Das erste Bauteil 7 weist einen gegenüber einer Längsachse 13 des ersten Bauteils 7 schräg verlaufenden Kanal 14 auf, an welchem der gewindelose Abschnitt 8 angeordnet ist.

Das Gegengewinde 11 kann durch eine Schwenkbewegung aus der Verschiebestellung in die Eingriffsstellung überführt werden, vorzugsweise wobei die Schwenkbewegung manuell und/oder durch einen Anschlag eines der beiden Bauteile 7, 10 an einen Gegenanschlag 30 durchführbar ist. Als Anschlag kann z.B. ein Steg des ersten Beschlagteils 4 fungieren.

Der Gewindeabschnitt 9 weist eine erste Längsachse 15 auf und das Gegengewinde 11 eine zweite Längsachse 16 weist auf, wobei die beiden Längsachsen 15, 16 in der Verschiebestellung einen spitzen Winkel 17, vorzugsweise zwischen 5° und 15°, einschließen und in der Eingriffsstellung im Wesentlichen parallel zueinander angeordnet sind.

Ein Verfahren zur bewegbaren Lagerung eines Möbelteils 2, einer Tür oder eines Fensters an einer Trägerstruktur 3 mittels wenigstens eines Beschlags 1 kann durch die folgenden, vorzugsweise in der angegebenen Reihenfolge chronologischen, Verfahrensschritte gekennzeichnet sein: das zweite Beschlagteil 5 wird mit der Trägerstruktur 3 verbunden, das Möbelteil 2, die Tür oder das Fenster wird mit dem ersten Beschlagteil 4 verbunden, und das erste Beschlagteil 4 wird mittels der wenigstens einen Befestigungsvorrichtung 6 am zweiten Beschlagteil 5 befestigt, wobei das Gegengewinde 11 in der Verschiebestellung relativ zum gewindelosen Abschnitt 8 verschoben, anschließend, durch eine Schwenkbewegung, in die Eingriffsstellung überführt und schließlich in der Eingriffsstellung durch eine Rotationsbewegung so lange relativ zum Gewindeabschnitt 9 bewegt wird, bis die beiden Beschlagteile 4, 5 zueinander fixiert sind.

## Patentansprüche

1. Beschlag (1) zur bewegbaren Lagerung eines Möbelteils (2), einer Tür oder eines Fensters an einer Trägerstruktur (3), umfassend eines erstes Beschlagteil (4), welches mit dem Möbelteil (2), der Tür oder dem Fenster verbindbar oder verbunden ist, und wenigstens ein zweites Beschlagteil (5), welches mit der Trägerstruktur (3) verbindbar oder verbunden ist, wobei wenigstens eine Befestigungsvorrichtung (6) vorgesehen ist, mit welcher das erste Beschlagteil (4) am zweiten Beschlagteil (5) befestigbar ist, wobei die Befestigungsvorrichtung (6) wenigstens ein erstes Bauteil (7) mit wenigstens einem gewindelosen Abschnitt (8) und wenigstens einem Gewindeabschnitt (9) und wenigstens ein zweites Bauteil (10) mit wenigstens einem Gegengewinde (11) umfasst, wobei der gewindelose Abschnitt (8), der Gewindeabschnitt (9) und das Gegengewinde (11) derart an den beiden Bauteilen (7, 10) der Befestigungsvorrichtung (6) angeordnet sind, dass das Gegengewinde (11) in einer Verschiebestellung mit dem gewindelosen Abschnitt (8) in Kontakt steht und in einer Eingriffsstellung mit dem Gewindeabschnitt (9) in Eingriff steht, **dadurch gekennzeichnet, dass** das erste Bauteil (7) einen gegenüber einer Längsachse (15) des ersten Bauteils (7) schräg verlaufenden Kanal (14) aufweist, an welchem der gewindelose Abschnitt (8) angeordnet ist, wobei das Gegengewinde (11) durch eine Schwenkbewegung aus der Verschiebestellung in die Eingriffsstellung überführbar ist.

2. Beschlag (1) nach Anspruch 1, wobei das erste Bauteil (7) der Befestigungsvorrichtung (6) als Mutter, vorzugsweise als Einpressmutter, ausgebildet ist, und/oder im oder am zweiten Beschlagteil (5) angeordnet ist.

3. Beschlag (1) nach Anspruch 1 oder 2, wobei das erste Bauteil (7) eine im Wesentlichen zylinderförmige Innenwandung (12) aufweist und der gewindelose Abschnitt (8) und der Gewindeabschnitt (9) an der Innenwandung (12) angeordnet sind.

4. Beschlag (1) nach einem der Ansprüche 1 bis 3, wobei das zweite Bauteil (10) der Befestigungsvorrichtung (6) als Schraube, vorzugsweise als Rändelschraube, ausgebildet ist, und/oder in Kontakt mit dem ersten Beschlagteil (4) bringbar ist.

5. Beschlag (1) nach einem der Ansprüche 1 bis 4, wobei die Schwenkbewegung manuell und/oder durch einen Anschlag eines der beiden Bauteile (7, 10) an einen Gegenanschlag (30) durchführbar ist.

6. Beschlag (1) nach einem der Ansprüche 1 bis 5, wobei der Gewindeabschnitt (9) eine erste Längsachse (15) aufweist und das Gegengewinde (11) eine zweite Längsachse (16) aufweist, und wobei die beiden Längsachsen (15, 16) in der Verschiebestellung einen spitzen Winkel (17), vorzugsweise zwischen 5° und 15°, einschließen und in der Eingriffsstellung im Wesentlichen parallel zueinander angeordnet sind.

7. Beschlag (1) nach einem der Ansprüche 1 bis 6, wobei mehr als eine, vorzugsweise zwei oder drei, Befestigungsvorrichtung (6) vorgesehen ist, mit welcher das erste Beschlagteil (4) am zweiten Beschlagteil (5) befestigbar ist.

8. Beschlag (1) nach einem der Ansprüche 1 bis 7, wobei das erste Beschlagteil (4)
- wenigstens eine, vorzugsweise mehrere, Schnittstelle (18) zur, vorzugsweise lösbaren, Befestigung eines Scharniers (19) aufweist, und/oder
- als Stahlprofil ausgebildet ist, und/oder
- in einem Querschnitt im Wesentlichen C-förmig ausgebildet ist.

9. Beschlag (1) nach einem der Ansprüche 1 bis 8, wobei das zweite Beschlagteil (5) einen längserstreckten Träger (20) umfasst.

10. Beschlag (1) nach einem der Ansprüche 1 bis 9, wobei wenigstens eine mit dem zweiten Beschlagteil (5) verbindbare oder verbundene Führungsvorrichtung (21) und wenigstens eine Führungsschiene (22) vorgesehen sind, an welcher die Führungsvorrichtung (21) verschiebbar lagerbar oder gelagert ist, und/oder wobei wenigstens eine Kompensationsvorrichtung (23) zur Kompensation eines Kippmoments vorgesehen ist, welche mit dem zweiten Beschlagteil (5) verbindbar ist, vorzugsweise wobei die Kompensationsvorrichtung (23) wenigstens eine, vorzugsweise Y-förmige, Schere (24) und/oder wenigstens einen Seilzug (25) umfasst.

11. Beschlag (1) nach einem der Ansprüche 1 bis 10, wobei der Gewindeabschnitt (9) und/oder das Gegengewinde (11) wenigstens einen Klebepunkt (29) aufweisen, mit welchem die beiden Bauteilen (7, 10) der Befestigungsvorrichtung (6) in der Eingriffsstellung verklebbar sind, vorzugsweise wobei der Klebepunkt (29) aus einem Kleber besteht, welcher durch eine mechanische Beanspruchung aktivierbar ist.

12. Beschlag (1) nach einem der Ansprüche 1 bis 11, wobei die beiden Beschlagteile (4, 5) in einem befestigten Zustand zu einem überwiegenden Teil flächig aneinander anliegen, und/oder wobei wenigstens ein zusätzliches von der Befestigungsvorrichtung (6) gesondertes Fixiermittel (26) vorgesehen ist, mit welchem die beiden Beschlagteile (4, 5) fixierbar sind.

13. Möbel (27) mit wenigstens einer Trägerstruktur (3), welche vorzugsweise einen schachtförmigen Hohlraum (28) aufweist, wenigstens einem Beschlag (1) nach einem der Ansprüche 1 bis 12, und wenigstens einem an der Trägerstruktur (3) mittels des Beschlags (1) bewegbar gelagerten Möbelteil (2), welches vorzugsweise als Falt- oder Falt-Schiebe-Tür ausgebildet ist.

14. Verfahren zur bewegbaren Lagerung eines Möbelteils (2), einer Tür oder eines Fensters an einer Trägerstruktur (3) mittels wenigstens eines Beschlags (1) gemäß einem der Ansprüche 1 bis 12, **gekennzeichnet durch** die folgenden, vorzugsweise in der angegebenen Reihenfolge chronologischen, Verfahrensschritte:
- das zweite Beschlagteil (5) wird mit der Trägerstruktur (3) verbunden,
- das Möbelteil (2), die Tür oder das Fenster wird mit dem ersten Beschlagteil (4) verbunden,
- das erste Beschlagteil (4) wird mittels der wenigstens einen Befestigungsvorrichtung (6) am zweiten Beschlagteil (5) befestigt, wobei das Gegengewinde (11) in der Verschiebestellung relativ zum gewindelosen Abschnitt (8) verschoben, anschließend, durch eine Schwenkbewegung, in die Eingriffsstellung überführt und schließlich in der Eingriffsstellung durch eine Rotationsbewegung so lange relativ zum Gewindeabschnitt (9) bewegt wird, bis die beiden Beschlagteile (4, 5) zueinander fixiert sind.

## Claims

1. Fitting (1) for movably mounting a furniture part (2), a door or a window on a support structure (3), comprising a first fitting part (4), which can be connected or is connected to the furniture part (2), the door or the window, and at least one second fitting part (5), which can be connected or is connected to the support structure (3), wherein at least one fastening device (6) is provided with which the first fitting part (4) can be fastened to the second fitting part (5), wherein the fastening device (6) comprises at least one first component (7) with at least one threadless section (8) and at least one threaded section (9) and at least one second component (10) with at least one mating thread (11), wherein the threadless section (8), the threaded section (9) and the mating thread (11) are arranged on the two components (7, 10) of the fastening device (6) such that the mating thread (11) is in contact with the threadless section (8) in a displacement position and is engaged with the threaded section (9) in an engagement position, **characterized in that** the first component (7) has a channel (14), which runs diagonally with respect to a longitudinal axis (15) of the first component (7) and on which the threadless section (8) is arranged, wherein the mating thread (11) can be transferred out of the displacement position into the engagement position by a pivoting movement.

2. Fitting (1) according to claim 1, wherein the first component (7) of the fastening device (6) is formed as a nut, preferably as a press nut, and/or is arranged in or on the second fitting part (5).

3. Fitting (1) according to claim 1 or 2, wherein the first component (7) has a substantially cylindrical internal wall (12) and the threadless section (8) and the threaded section (9) are arranged on the internal wall (12).

4. Fitting (1) according to one of claims 1 to 3, wherein the second component (10) of the fastening device (6) is formed as a screw, preferably as a knurled screw, and/or can be brought into contact with the first fitting part (4).

5. Fitting (1) according to one of claims 1 to 4, wherein the pivoting movement can be carried out manually and/or by a limit stop of one of the two components (7, 10) against a counter limit stop (30).

6. Fitting (1) according to one of claims 1 to 5, wherein the threaded section (9) has a first longitudinal axis (15) and the mating thread (11) has a second longitudinal axis (16), and wherein the two longitudinal axes (15, 16) enclose an acute angle (17), preferably between 5° and 15°, in the displacement position and are arranged substantially parallel to each other in the engagement position.

7. Fitting (1) according to one of claims 1 to 6, wherein more than one, preferably two or three, fastening device (6) is provided with which the first fitting part (4) can be fastened to the second fitting part (5).

8. Fitting (1) according to one of claims 1 to 7, wherein the first fitting part (4)
- has at least one, preferably several, interface (18) for the preferably releasable fastening of a hinge (19), and/or
- is formed as a steel profile, and/or
- is formed substantially C-shaped in a cross section.

9. Fitting (1) according to one of claims 1 to 8, wherein the second fitting part (5) comprises a longitudinally extended support (20).

10. Fitting (1) according to one of claims 1 to 9, wherein at least one guide device (21), connectable or connected to the second fitting part (5), and at least one guide rail (22), on which the guide device (21) is displaceably mountable or mounted, are provided and/or wherein at least one compensation device (23), which can be connected to the second fitting part (5), is provided for compensating for a tilting moment, preferably wherein the compensation device (23) comprises at least one, preferably Y-shaped, scissor-type support (24) and/or at least one cable pull (25).

11. Fitting (1) according to one of claims 1 to 10, wherein the threaded section (9) and/or the mating thread (11) have at least one glue dot (29) with which the two components (7, 10) of the fastening device (6) can be glued together in the engagement position, preferably wherein the glue dot (29) consists of a glue which can be activated by a mechanical load.

12. Fitting (1) according to one of claims 1 to 11, wherein the two fitting parts (4, 5) rest predominantly flat against each other when fastened, and/or wherein at least one additional fixing means (26), separate from the fastening device (6), is provided with which the two fitting parts (4, 5) can be fixed.

13. Piece of furniture (27) with at least one support structure (3), which preferably has a shaft-like cavity (28), at least one fitting (1) according to one of claims 1 to 12, and at least one furniture part (2), movably mounted on the support structure (3) by means of the fitting (1), which is preferably formed as a folding door or folding sliding door.

14. Method for movably mounting a furniture part (2), a door or a window on a support structure (3) by means of at least one fitting (1) according to one of claims 1 to 12, **characterized by** the following method steps, which are preferably chronological in the specified order:
- the second fitting part (5) is connected to the support structure (3),
- the furniture part (2), the door or the window is connected to the first fitting part (4),
- the first fitting part (4) is fastened to the second fitting part (5) by means of the at least one fastening device (6), wherein the mating thread (11) is displaced relative to the threadless section (8) in the displacement position, is then transferred into the engagement position by a pivoting movement, and in the engagement position is finally moved by a rotational movement relative to the threaded section (9) until the two fitting parts (4, 5) are fixed to each other.

## Revendications

1. Ferrure (1) pour le logement mobile d'une partie de meuble (2), d'une porte ou d'une fenêtre au niveau d'une structure porteuse (3), comprenant une première partie de ferrure (4) qui est ou peut être reliée à la partie de meuble (2), à la porte ou à la fenêtre, et au moins une seconde partie de ferrure (5) qui est ou peut être reliée à la structure porteuse (3), dans laquelle au moins un dispositif de fixation (6) est prévu, avec lequel la première partie de ferrure (4) peut être fixée à la seconde partie de ferrure (5), dans laquelle le dispositif de fixation (6) ;
comprend au moins un premier composant (7) avec au moins une section sans filetage (8) et au moins une section filetée (9) et au moins un second composant (10) avec au moins un contre-filetage (11), dans laquelle la section sans filetage (8), la section filetée (9) et le contre-filetage (11) sont agencés au niveau des deux composants (7, 10) du dispositif de fixation (6) de sorte que le contre-filetage (11) soit en contact dans une position de déplacement avec la section sans filetage (8) et en prise avec la section filetée (9) dans une position de prise, **caractérisée en ce que** le premier composant (7) présente un canal (14) s'étendant en oblique par rapport à un axe longitudinal (15) du premier composant, au niveau duquel canal la section sans filetage (8) est agencée, dans laquelle le contre-filetage (11) est transférable par un mouvement de pivotement de la position de déplacement dans la position de prise.

2. Ferrure (1) selon la revendication 1, dans laquelle le premier composant (7) du dispositif de fixation (6) est réalisé comme écrou, de préférence comme écrou d'emmanchement, et/ou est agencé dans ou au niveau de la seconde pièce de ferrure (5).

3. Ferrure (1) selon la revendication 1 ou 2, dans laquelle le premier composant (7) présente une paroi intérieure (12) sensiblement cylindrique et la section sans filetage (8) et la section filetée (9) sont agencées au niveau de la paroi intérieure (12).

4. Ferrure (1) selon l'une quelconque des revendications 1 à 3, dans laquelle le second composant (10) du dispositif de fixation (6) est réalisé comme vis, de préférence comme vis moletée, et/ou peut être mis en contact avec la première partie de ferrure (4).

5. Ferrure (1) selon l'une quelconque des revendications 1 à 4, dans laquelle le mouvement de pivotement peut être réalisé manuellement et/ou par une butée de l'un des deux composants (7, 10) contre une contre-butée (30).

6. Ferrure (1) selon l'une quelconque des revendications 1 à 5, dans laquelle la section filetée (9) présente un premier axe longitudinal (15) et le contre-filetage (11) présente un second axe longitudinal (16), et dans laquelle les deux axes longitudinaux (15, 16) forment dans la position de déplacement un angle aigu (17), de préférence entre 5° et 15°, et sont agencés sensiblement parallèlement l'un à l'autre dans la position de prise.

7. Ferrure (1) selon l'une quelconque des revendications 1 à 6, dans laquelle plus d'un, de préférence deux ou trois, dispositif de fixation (6) est prévu, avec lequel la première partie de ferrure (4) peut être fixée à la seconde partie de ferrure (5).

8. Ferrure (1) selon l'une quelconque des revendications 1 à 7, dans laquelle la première partie de ferrure (4)
- présente au moins une, de préférence plusieurs, interface (18) pour la fixation, de préférence détachable, d'une charnière (19), et/ou
- est formée comme un profilé en acier et/ou
- est formée dans une section transversale sensiblement en C.

9. Ferrure (1) selon l'une quelconque des revendications 1 à 8, dans laquelle la seconde partie de ferrure (5) comprend un support (20) étiré longitudinalement.

10. Ferrure (1) selon l'une quelconque des revendications 1 à 9, dans laquelle au moins un dispositif de guidage (21) relié ou pouvant être relié à la seconde partie de ferrure (5) et au moins un rail de guidage (22) sont prévus, au niveau duquel rail le dispositif de guidage (21) est ou peut être logé de manière mobile, et/ou dans laquelle au moins un dispositif de compensation (23) est prévu pour compenser un couple de basculement, lequel peut être relié à la seconde partie de ferrure (5), de préférence dans laquelle le dispositif de compensation (23) comprend au moins un ciseau (24), de préférence en forme de Y, et/ou au moins un câble de traction (25).

11. Ferrure (1) selon l'une quelconque des revendications 1 à 10, dans laquelle la section filetée (9) et/ou le contre-filetage (11) présentent au moins un point de collage (29), avec lequel les deux composants (7, 10) du dispositif de fixation (6) peuvent être collés dans la position de prise, de préférence dans laquelle le point de collage (29) se compose d'une colle qui peut être activée par une sollicitation mécanique.

12. Ferrure (1) selon l'une quelconque des revendications 1 à 11, dans laquelle les deux parties de ferrure (4, 5) reposent l'une contre l'autre à plat en majeure partie dans un état fixé, et/ou dans laquelle au moins un moyen de fixation (26) supplémentaire séparé du dispositif de fixation (6) est prévu, avec lequel les deux parties de ferrure (4, 5) peuvent être fixées.

13. Meuble (27) présentant au moins une structure porteuse (3), qui présente de préférence un espace creux en forme de puits (28), au moins une ferrure (1) selon l'une quelconque des revendications 1 à 12, et au moins une partie de meuble (2) logée de manière mobile au niveau de la structure porteuse (3) au moyen de la ferrure (1), partie qui est de préférence réalisée comme porte pliante ou pliante coulissante.

14. Procédé de logement mobile d'une partie de meuble (2), d'une porte ou d'une fenêtre au niveau d'une structure porteuse (3) au moyen d'au moins une ferrure (1) selon l'une quelconque des revendications 1 à 12, **caractérisé par** les étapes de procédé suivantes, chronologiques de préférence dans l'ordre indiqué :
- la seconde partie de ferrure (5) est reliée à la structure porteuse (3),
- la partie de meuble (2), la porte ou la fenêtre est reliée à la première partie ferrure (4),
- la première partie de ferrure (4) est fixée à la seconde pièce de ferrure (5) au moyen de l'au moins un dispositif de fixation (6), dans lequel le contre-filetage (11) est déplacé dans la position de déplacement par rapport à la section sans filetage (8), puis par un mouvement de pivotement, transféré en position de prise et enfin déplacé dans la position de prise par un mouvement de rotation par rapport à la section filetée (9) jusqu'à ce que les deux parties de ferrure (4, 5) soient fixées l'une à l'autre.
